# FASCICULE DE BREVET EUROPEEN

(11) **EP 2 322 812 B1**
(45) Date de publication et mention de la délivrance du brevet: **02.01.2013**
(21) Numéro de dépôt: 10014543.2
(22) Date de dépôt: 12.11.2010
(51) Int. Cl.: F16B 7/04

(54) **Dispositif de verrouillage à griffes avec manchon verrouilleur rotatif**
Vorrichtung zur Klauenverriegelung mit Drehverriegelungskupplung
Finger locking device with rotary locking sleeve

(30) Priorité: 12.11.2009 FR 0905425
(43) Date de publication de la demande: 18.05.2011
(73) Titulaire: Messier-Bugatti-Dowty, 78140 Velizy Villacoublay (FR)
(72) Inventeur: Charuel, Hervé, 91620 Nozay (FR); Quenerch`du, Marc, 75020 Paris (FR)
(74) Mandataire: Parzy, Benjamin Alain

(56) Documents cités:
- WO-A1-00/77434
- DE-A1- 2 031 629
- US-A- 2 457 523

## Description

L'invention est relative à un dispositif de verrouillage en position de deux éléments mobiles relativement l'un à l'autre selon une direction axiale, par exemple une tige montée pour coulisser télescopiquement dans un cylindre.

### ARRIERE-PLAN TECHNOLOGIQUE

Certains vérins ou autres actionneurs télescopiques sont équipés d'un dispositif de verrouillage en position de la tige, en particulier en position rentrée ou sortie. On connaît des dispositifs de verrouillage comportant d'une part une virole présentant un certain nombre de griffes élastiquement déformables qui s'étendent en porte à faux selon une direction axiale en étant terminées par des crochets, et d'autre part une partie d'ancrage comportant un retrait annulaire pour recevoir les crochets, la virole et la partie d'ancrage étant montés sur deux parties de l'actionneur relativement mobiles.

par exemple, la virole est disposée au fond du cylindre de l'actionneur, tandis que la partie d'ancrage est solidaire de la tige coulissante de l'actionneur. La partie d'ancrage comporte un redan pour, lorsque la partie d'ancrage est engagée sous les griffes, faire fléchir ces dernières. La partie d'ancrage comporte ensuite un retrait annulaire pour permettre aux griffes de revenir en position de repos une fois que les crochets ont passé le redan, les crochets étant alors engagés dans le retrait annulaire. Un manchon de verrouillage est alors déplacé axialement pour coiffer les griffes et ainsi empêcher la déformation radiale de celles-ci, de sorte que les crochets sont maintenus prisonniers dans le retrait annulaire. La tige est alors verrouillée en position.

Pour déverrouiller la tige, il suffit de reculer le manchon de sorte à permettre de nouveau les flexions des griffes, et de faire éloigner la partie d'ancrage de la virole.

Ce type de verrouillage est particulièrement bien maîtrisé dans le cas de vérins hydrauliques. Le manchon de verrouillage est lui-même déplacé au moyen de fluide sous pression, de concert avec le déplacement de la tige, sans qu'il soit besoin de prévoir une commande individualisée. En technologie électromécanique, la situation est plus délicate. Un exemple d'utilisation d'un verrouillage à griffes est donné dans le document FR2895482. Dans ce document, le dispositif de verrouillage est utilisé pour immobiliser une tige auxiliaire dans une tige principale. Le manchon de verrouillage est déplacé axialement au moyen d'un moteur électrique rotatif spécialement prévu pour déplacer le manchon de verrouillage, et dont le mouvement de rotation est transformé, via une liaison hélicoïdale, en un mouvement axial du manchon de verrouillage.

Les documents suivants illustrent également l'état de la technique : US2457523, WO00/77434, DE2031629.

### OBJET DE L'INVENTION

L'invention vise à proposer un dispositif de verrouillage à griffes permettant une intégration plus facile dans un vérin ou un actionneur à technologie électromécanique.

### BREVE DESCRIPTION DE L'INVENTION

Dispositif de verrouillage pour verrouiller entre eux des premier et deuxième éléments mobiles relativement l'un à l'autre selon une direction axiale, le dispositif comportant d'une part une virole solidaire du premier élément et comportant des griffes s'étendant en porte-à-faux selon une direction axiale et élastiquement déformables, et d'autre part une partie d'ancrage solidaire du deuxième élément et comportant un retrait annulaire pour recevoir des extrémités en crochet des griffes, le dispositif comportant en outre un manchon de verrouillage monté mobile relativement aux griffes entre une position de libération dans laquelle les griffes sont laissées libres de fléchir, et une position de blocage dans laquelle les griffes sont empêchées de fléchir.

Selon l'invention le manchon de verrouillage est mobile en rotation relativement aux griffes et comporte une succession circonférentielle de dégagements et d'obstacles de sorte que lorsque le manchon est dans une première position angulaire correspondant à la position de libération, les dégagements sont en regard des griffes qui sont dès lors libres de fléchir sous l'effet du déplacement de la partie d'ancrage, et
lorsque le manchon est dans une deuxième position angulaire correspondant à la position de blocage, les dégagements sont décalés par rapport aux griffes de sorte que celles-ci soient en regard des obstacles du manchon de verrouillage empêchant les griffes de fléchir lorsque leurs extrémités sont engagées dans le retrait de la partie d'ancrage.

Ainsi, lorsque le manchon est dans la première position angulaire, les griffes sont en regard des dégagements, et peuvent donc fléchir librement lors de l'engagement de la partie d'ancrage sous les extrémités en crochet des griffes. Puis, lorsque les extrémités des griffes sont engagées dans le retrait annulaire, le manchon est amené dans la deuxième position angulaire, les griffes sont en regard d'un obstacle du manchon et sont donc empêchés de fléchir, de sorte que les crochets ne peuvent s'échapper du retrait annulaire de la partie d'ancrage. Le dispositif est alors verrouillé.

### BREVE DESCRIPTION DES FIGURES

L'invention sera mieux comprise à la lumière de la description qui suit des figures des dessins annexés, parmi lesquels :
- la figure 1 est une vue de côté d'un dispositif de verrouillage selon un premier mode particulier de réalisation de l'invention, illustré avant l'engagement des extrémités des extrémités des griffes dans le retrait annulaire de la partie d'ancrage, le manchon étant en position de libération ;
- la figure 2 est une vue en coupe partielle selon la ligne II-II de la figure 1, montrant les griffes en position fléchie ;
- la figure 3 est un agrandissement de la figure 2 ;
- la figure 4 est une vue de côté vue de côté du dispositif de verrouillage, vu après engagement des extrémités des griffes dans le retrait annulaire de la partie d'ancrage, le manchon étant en position de blocage ;
- la figure 5 est une vue en coupe partielle selon la ligne V-V de la figure 4 ;
- la figure 6 est un agrandissement de la figure 5.

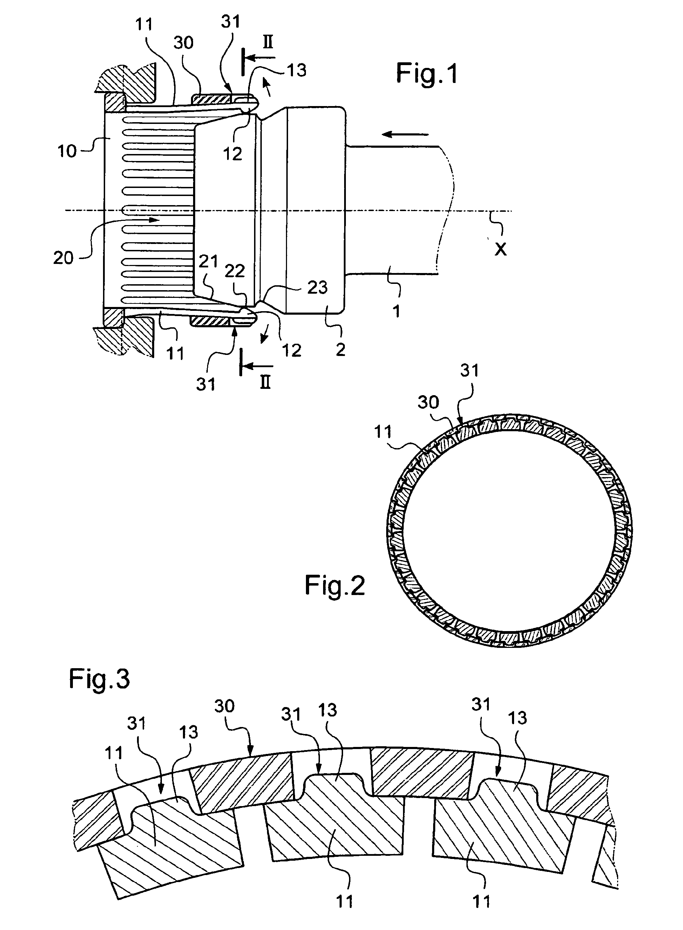

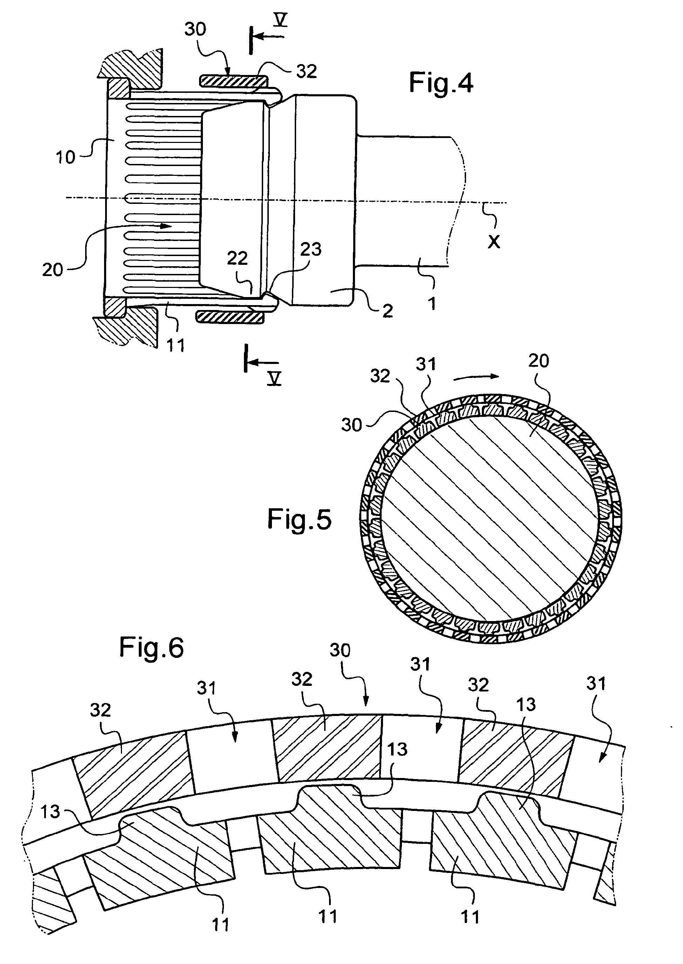

- Les figures 6 à 10 sont des vues similaires aux figures 1, 2, 4, 5, d'un dispositif selon un deuxième mode particulier de réalisation de l'invention.

### DESCRIPTION DETAILLEE DES FIGURES.

En référence à la figure 1, le dispositif de verrouillage de l'invention est ici illustré en application à un actionneur comportant une tige 1 pourvu d'un palier terminal 2 monté à coulissement axial selon un axe longitudinal X dans un cylindre non représenté ici pour plus de clarté. La tige 1 est ici montée pour coulisser dans un cylindre non représenté ici.

Le dispositif de verrouillage de l'invention comporte tout d'abord une virole 10 qui est ici fixée au fond du cylindre. La virole 10 comporte une pluralité de griffes 11 terminées par des extrémités 12 en forme de crochet. Les griffes 11 sont avantageusement obtenues par l'usinage d'encoches longitudinales dans la virole pour délimiter une multitude de griffes s'étendant en porte-à-faux d'une partie pleine de la virole. Les griffes sont élastiquement déformables.

Le dispositif de l'invention comporte par ailleurs une partie d'ancrage 20 solidaire ici du piston 2 de la tige 1. La partie d'ancrage 20 est de forme généralement de révolution et présente successivement une pente d'engagement 21 se terminant par un redan 22, suivi d'un retrait annulaire 23.

Le dispositif de l'invention comporte enfin un manchon de verrouillage 30 s'étendant autour de la virole 10 et monté selon l'invention à rotation dans le cylindre de l'actionneur autour de la virole 10. Le manchon de verrouillage 30 comporte des encoches 31 régulièrement espacées qui sont plus visibles sur les figures 2 et 3. Ces encoches permettent de définir deux positions angulaires du manchon par rapport à la virole 10. Dans une première position angulaire appelée position de libération et illustrée aux figures 1 à 3, les encoches 31 sont en regard des griffes 11. Dans une deuxième position angulaire illustrée aux figures 4 à 6, les encoches 31 sont décalées par rapport aux griffes 11, de sorte que celles-ci sont en regard de parties pleines 32 du manchon 30.

Le fonctionnement du dispositif de verrouillage de l'invention est le suivant. Le manchon de verrouillage étant initialement disposé dans la position de libération, la partie d'ancrage 20 est engagée dans la virole 10. Les extrémités 12 viennent en appui sur la pente 21, ce qui provoque la flexion des griffes 11, jusqu'à ce que les extrémités 12 viennent en appui sur le redan 22, comme illustré sur la figure 1. La flexion des griffes 11 est rendue possible par le fait que les griffes 11 se trouvent en regard des encoches 31 du manchon de verrouillage 30; Dans cette position, et ainsi que cela est visible à la figure 2, les encoches 31 forment des dégagements qui permettent au patin 13 s'étendant en saillie du dos de chacun des griffes 11 de s'effacer en pénétrant dans l'encoche 31 en regard. Cette position du manchon de verrouillage 30 est une position de libération.

Puis la partie d'ancrage 30 ayant été avancée plus avant, les extrémités 12 des griffes 11 tombent dans le retrait annulaire 23, laissant ainsi les griffes 11 revenir à leur position de repos, tel qu'illustré à la figure 4. Selon l'invention, le manchon de verrouillage 30 est pivoté de la position de la figure 2 à la position de la figure 5, de sorte que les encoches 31 soient décalées par rapport aux griffes 11 et que les patins 13 de celles-ci soient en regard des parties pleines 32 du manchon de verrouillage 30. Ainsi, les griffes 11 sont empêchées de fléchir par les parties pleines 32 formant des obstacles, de sorte que leurs extrémités 12 des griffes 11 restent prisonnières dans le retrait annulaire 23, verrouillant ainsi la tige 1 en position. Cette position du manchon de verrouillage 30 est une position de blocage.

Pour libérer la tige, il suffit de pivoter le manchon de verrouillage 30 pour le faire revenir à la position de libération de la figure 2. Ainsi, les griffes 11 peuvent à nouveau fléchir de sorte que les extrémités 12 en forme de crochet peuvent quitter le retrait annulaire 23.

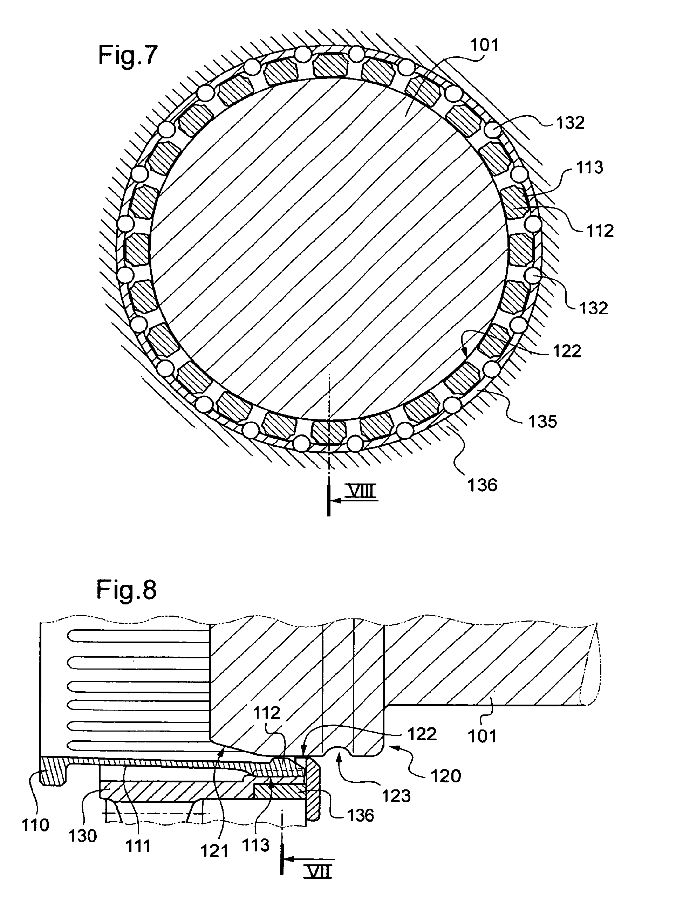

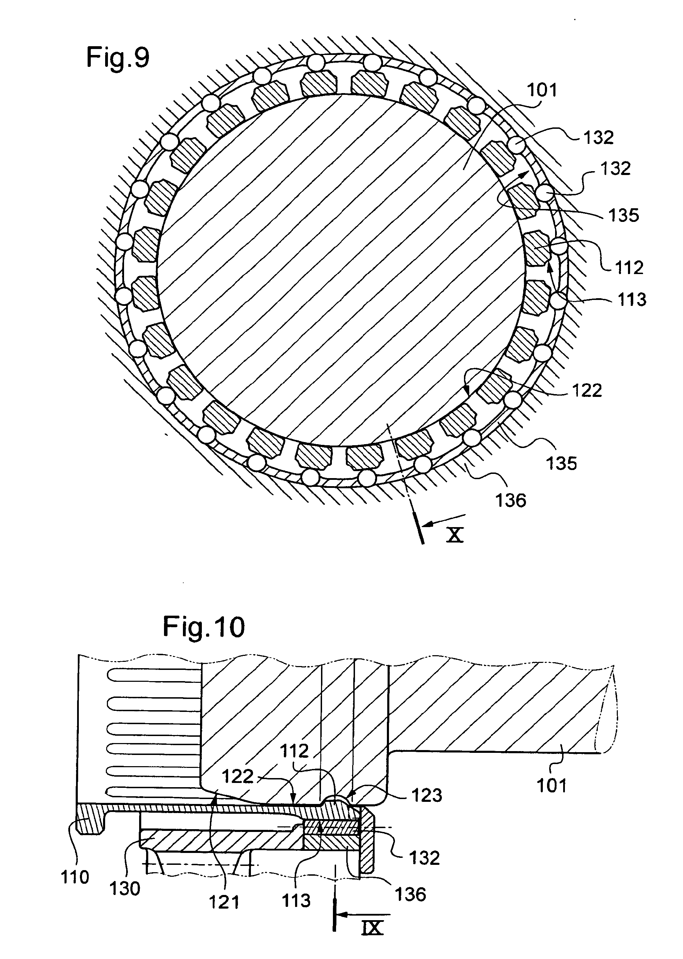

Selon un deuxième mode de réalisation illustré aux figures 7 à 10, et sur lesquelles les références des éléments communs avec ceux du mode de réalisation précédent ont été augmentées d'une centaine, le manchon 130 comporte une partie annulaire 135 qui s'étend en regard des patins 113 des griffes 111 et qui est régulièrement évidé pour former des réceptacles recevant des rouleaux 132. Les rouleaux 132 roulent sur une piste annulaire 136 lors de la rotation du manchon 130 entre la position de libération et la position de blocage. Ainsi, les dégagements sont maintenant formés par les espaces 131 entre deux rouleaux 132 consécutifs, tandis que les rouleaux 132 forment les obstacles coopérant avec les patins 113 des griffes 111 pour empêcher celles-ci de fléchir lorsque le manchon 132 est en position de blocage. Sur les figures 7 et 8, le manchon 132 est en position de libération. Les griffes 111 fléchissent, au passage du redan de la partie d'ancrage 120, dans les dégagements 131 qui s'étendent entre deux rouleaux consécutifs. Sur les figures 9 et 10, la partie d'ancrage 120 a avancé de sorte que les crochets des griffes ont pénétré dans le retrait 123 de la partie d'ancrage 120. Le manchon 130 a été pivoté jusqu'à la position illustrée dans laquelle les rouleaux 132 empêchent les griffes de fléchir.

Ainsi, on parvient à verrouiller et libérer les griffes au moyen d'un manchon pivotant, qui peut très facilement être déplacé au moyen d'un dispositif électromécanique rotatif, évitant ainsi la transformation de mouvement rotatif/longitudinal illustrée dans le document FR2895482. Par exemple, on peut équiper le manchon de verrouillage d'aimants permanents de sorte que le manchon lui-même forme le rotor d'un moteur électrique pas à pas. En outre, le manchon de verrouillage peut être tourné toujours dans le même sens, puisque la disposition circonférentielle régulière des dégagements et des obstacles permet de définir une succession alternée de positions angulaires de libération et de positions angulaires de blocage.

L'invention n'est pas limitée à ce qui vient d'être décrit, mais englobe au contraire toute variante entre dans le cadre défini par les revendications. En particulier, bien que l'on ait indiqué ici que le manchon, l'invention couvre tout dispositif de verrouillage dont le manchon comporte une succession circonférentielle de dégagements et d'obstacles, ces derniers étant constitués par les parties pleines du premier mode de réalisation, ou les rouleaux de deuxième mode de réalisation, ou d'autres encore, comme par exemple de billes.

En outre, bien que dans l'exemple illustré, la partie d'ancrage s'engage à l'intérieur de la virole de sorte que les extrémités en crochets des griffes soient tournées vers l'intérieur, l'invention s'applique également à un dispositif de verrouillage dans lequel la partie d'ancrage est annulaire et s'engage à l'extérieur des griffes de sorte que les extrémités en crochets des griffes soient tournées vers l'extérieur. Dans ce cas, le manchon de verrouillage s'étendra non par autour de la griffes, mais à l'intérieur de celle-ci.

Enfin, bien que dans les exemples illustrés, la virole portant les griffes et le manchon soient solidaires du même élément (en l'occurrence ici le cylindre de l'actionneur), le manchon pourra être solidaire de l'autre élément. De même, bien que l'on a ici organisé la rotation du manchon par rapport au premier élément, alors que la virole est immobile sur le premier élément, le lecteur aura bien compris que ce qui importe ici est la possiblité d'un mouvement de rotation relatif entre la virole portant les griffes et le manchon pour amener celui-ci de la position de libération à la position de blocage quand les extrémités des griffes ont pénétré dans le retrait annulaire de la partie d'ancrage.

## Revendications

1. Dispositif de verrouillage pour verrouiller entre eux des premier et deuxième éléments mobiles relativement l'un à l'autre selon une direction axiale, le dispositif comportant d'une part une virole (10) solidaire du premier élément et comportant des griffes (11) s'étendant en porte-à-faux selon une direction axiale et élastiquement déformables, et d'autre part une partie d'ancrage (20) solidaire du deuxième élément et comportant un retrait annulaire (23) pour recevoir des extrémités en crochet des griffes, le dispositif comportant en outre un manchon de verrouillage (30) monté mobile relativement aux griffes entre une position de libération dans laquelle les griffes sont laissées libres de fléchir, et une position de blocage dans laquelle les griffes sont empêchées de fléchir ;
**caractérisé en ce que** le manchon de verrouillage est mobile en rotation relativement aux griffes et comporte une succession circonférentielle de dégagements (31) et d'obstacles (32, 132) de sorte que :
Lorsque le manchon est dans une première position angulaire correspondant à la position de libération, les dégagements sont en regard des griffes qui sont dès lors libres de fléchir ; sous l'effet du déplacement de la partie d'ancrage ;
et lorsque le manchon est dans une deuxième position angulaire correspondant à la position de blocage, les dégagements sont décalés par rapport aux griffes de sorte que celles-ci soient en regard des obstacles du manchon de verrouillage empêchant les griffes de fléchir lorsque leurs extrémités sont engagées dans le retrait de la partie d'ancrage.

2. Dispositif selon la revendication 1, dans lequel les obstacles un manchon (30) sont des portions pleines (32) de celui-ci.

3. Dispositif selon la revendication 1, dans lequel les obstacles du manchon (130) sont des rouleaux (132) reçu dans des logements des manchons.

4. Dispositif selon la revendication 1, dans lequel le manchon est monté mobile en rotation sur le premier élément, alors que la virole (10) est immobile relativement au premier élément.

## Claims

1. A locking device for locking together first and second elements that are movable relative to each other in an axial direction, the device comprising firstly a bushing (10) secured to first element and including catches (11) that are cantilevered-out in an axial direction and that are elastically deformable, and secondly an anchor portion (20) secured to the second element and including an annular setback (23) to receive hook-shaped ends of the catches, the device also including a locking sleeve (30) mounted to move relative to the catches between a release position in which the catches are free to flex, and a blocking position in which the catches are prevented from flexing, the device being **characterized in that** the locking sleeve is movable in rotation relative to the catches and includes a circumferential succession of gaps (31) and of obstacles (32, 132), such that:
• when the sleeve is in a first angular position corresponding to the release position, the gaps are in register with the catches which are therefore free to flex under the effect of the anchor portion moving; and
• when the sleeve is in a second angular position corresponding to the blocking position, the gaps are offset relative to the catches such that the catches are in register with the obstacles of the locking sleeve, thereby preventing the catches from flexing when their ends are engaged in the setback in the anchor portion.

2. A device according to claim 1, wherein the obstacles of the sleeve (30) are full portions (32) thereof.

3. A device according to claim 1, wherein the obstacles of the sleeve (130) are rollers (132) received in housings of the sleeve.

4. A device according to claim 1, wherein the sleeve is mounted to move in rotation on the first element, while the bushing (10) is stationary relative to the first element.

## Patentansprüche

1. Verriegelungsvorrichtung zum gegenseitigen Verriegeln von ersten und zweiten beweglichen Elementen relativ zueinander gemäß einer axialen Richtung, wobei die Vorrichtung einerseits einen fest mit dem ersten Element verbundenen Ring (10) und Klauen (11) umfasst, die sich auskragend axial erstrecken und elastisch verformbar sind, und andererseits einen mit dem zweiten Element fest verbundenen Verankerungsabschnitt (20) und einen ringförmigen Rücksprung (23) zur Aufnahme der Eingriffsenden der Klauen umfasst, wobei die Vorrichtung des Weiteren eine Verriegelungsmuffe (30) aufweist, die relativ zu den Klauen beweglich zwischen einer Freigabeposition, bei der sich die Klauen frei biegen können, und einer Sperrposition, bei der die Klauen gehindert werden sich zu biegen, angebracht ist;
**dadurch gekennzeichnet, dass** die Verriegelungsmuffe relativ zu den Klauen rotationsbeweglich ist und in Umfangsrichtung eine Folge von Freigaben (31) und Sperren (32, 132) aufweist, so dass:
Wenn sich die Muffe in einer ersten Winkelposition befindet, die der Freigabeposition entspricht, sich die Freigaben gegenüber den Klauen befinden, die sich von da an frei biegen können; und zwar unter Einfluss einer Verlagerung des Verankerungsabschnitts;
Und wenn sich die Muffe in einer zweiten Winkelposition befindet, die der Sperrposition entspricht, die Freigaben gegenüber den Klauen so versetzt sind, dass diese sich gegenüber den Sperren der Verriegelungsmuffe befinden, welche die Klauen daran hindern sich zu biegen, wenn ihre Enden in den Rücksprung des Verankerungsabschnittes eingreifen.

2. Vorrichtung nach Anspruch 1, bei der die Sperren einer Muffe (30) ausgefüllte Abschnitte (32) derselben sind.

3. Vorrichtung nach Anspruch 1, bei der die Sperren der Muffe (130) Rollen (132) sind, die in Aussparungen der Muffen aufgenommen sind.

4. Vorrichtung nach Anspruch 1, bei der die Muffe rotationsbeweglich auf dem ersten Element angebracht ist, während der Ring (10) relativ zum ersten Element fest ist.
